**Europäisches Patentamt**

**European Patent Office**

**Office européen des brevets**

(19)

(11) Veröffentlichungsnummer : **0 100 394**
**B1**

(12) **EUROPÄISCHE PATENTSCHRIFT**

(45) Veröffentlichungstag der Patentschrift :
07.05.86

(21) Anmeldenummer : **83101326.3**

(22) Anmeldetag : **11.02.83**

(51) Int. Cl.⁴ : **G 01 L 5/10**

(54) Verfahren und Vorrichtung zur Messung der Spannung an textilen Flächengebilden auf Textilmaschinen, insbesondere Webmaschinen.

(30) Priorität : **13.07.82 CH 4260/82**

(43) Veröffentlichungstag der Anmeldung :
**15.02.84 Patentblatt 84/07**

(45) Bekanntmachung des Hinweises auf die Patenterteilung : **07.05.86 Patentblatt 86/19**

(84) Benannte Vertragsstaaten :
**BE DE FR GB IT**

(56) Entgegenhaltungen :
**WO-A-82 /039 15**
**DE-A- 2 617 958**
**DE-B- 1 273 861**
**US-A- 3 364 403**

(73) Patentinhaber : **ZELLWEGER USTER AG**
**Wilstrasse 11**
**CH-8610 Uster (CH)**

(72) Erfinder : **Felix, Ernst**
**Bahnstrasse 35**
**CH-8610 Uster (CH)**

(74) Vertreter : **Dipl.-Phys.Dr. Manitz Dipl.-Ing. Finsterwald Dipl.-Ing. Grämkow Dipl.-Chem.Dr. Heyn Dipl.-Phys.Rotermund, B.Sc. Morgan Robert-Koch-Strasse 1 D-8000 München 22 (DE)**

## Beschreibung

Für die Herstellung fehlerfreier Gewebe auf Webmaschinen ist beispielsweise eine konstante Kettspannung von grösster Bedeutung. Es sind deshalb schon zahlreiche Verfahren und Vorrichtungen vorgeschlagen worden, diese Kettspannung zu regeln (vgl. z. B. US-A-3 364 403). Primäre Bedingung für eine bestimmte Kettspannung ist jedoch die korrekte Messung derselben.

Bis danhin erfolgte die Messung der Kettspannung meist über die gesamte Kettbreite, d. h. die Kettspannung wurde als Summe der Spannungen sämtlicher Kettfäden definiert. Diese Kettspannung wurde beispielsweise mittels eines federnd gelagerten Streichbaumes bestimmt, wobei die Grösse der durch die Kettspannung verursachten Verlagerung des Streichbaumes in Zugrichtung mittels geeigneter Wandler gemessen und in entsprechende Steuersignale umgeformt wurde.

Andere Systeme verwendeten in Textilmaschinen, insbesondere in der Webmaschine unterzubringende Auslenkorgane, mit welchen die Einsinktiefe von senkrecht zur Fadenrichtung wirkenden Kräften als Mass für die Spannung gewertet wurde. Andere Verfahren basierten auf pneumatischen Phänomenen, indem beispielsweise auf der Webmaschine ein zwischen die Kettfäden eingeführter elastischer Schlauch einerseits zusammengedrückt und andererseits durch einen bestimmten pneumatischen Druck soweit erweitert wurde, dass sich ein Gleichgewicht einstellte.

Jeder Aenderung der Kettspannung folgt eine Druckänderung, wenn der ursprüngliche Gleichgewichtszustand erhalten bleiben soll. Aus diesen Druckänderungen sind entsprechende Messignale ableitbar.

Die Messung und damit die Fadenspannung ist auf allen Stufen der Erzeugung textiler Fertigfabrikate von Interesse. Allgemein sind hier mit textilen Flächengebilden Anordnungen von gespannten Fäden bezeichnet, die eine Fläche definieren. Es können dies sowohl aus Einzelfäden bestehende Fadenscharen oder ganze Fadenschichten sein, als auch fertige, aus Kett- und Schussfäden bestehende Gewebe, oder auch Vliesstoffe ohne Einzelfäden. Von besonderem Interesse ist dabei die Kenntnis der Fadenspannung der Kettfäden auf Webmaschinen, die sowohl vor der Gewebebildung als auch nach derselben (vor oder nach dem Schusseintrag) als textile Flächengebilde gelten. Deshalb beziehen sich im nachfolgenden die prinzipiellen Ueberlegungen zum erfindungsgemässen Verfahren und den entsprechenden Vorrichtungen und die Ausführungsbeispiele im wesentlichen auf die Webmaschine ; sie sind aber im Prinzip auf alle Textilmaschinen anwendbar, bei denen Textile Flächengebilde in gespannter Form vorhanden sind.

Eine von den bekannten Systemen nur unvollkommen erfüllte Forderung ist die, dass die Messung der Kettspannung eine ausgezeichnete Langzeitstabilität aufweisen soll. Stillstände der Webmaschine beliebig langer Dauer sollen auf die Genauigkeit der Kettspannung keinen Einfluss haben, damit bei jedem Anweben dieselben Spannungsbedingungen reproduziert werden können.

Mechanische Kettspannungsaufnehmer sind jedoch mit grossen Massen behaftet und damit einerseits schwer ; sie ergeben daher nur ungenaue Kettspannungswerte, insbesondere während des Laufs der Webmaschine.

Auch die pneumatisch wirkenden Vorrichtungen vermochten sich nicht durchzusetzen.

Alle bekannten Messverfahren für die Kettspannung beruhen entweder auf der Spannungsmessung an Einzelfäden, von der auf die Gesamtspannung der Kette geschlossen wurde, oder aber auf die totale Kettspannung über die ganze Breite der Kettfadenschicht. Durch die Einzelfadenmessung im Sinne einer Stichprobe kann infolge einer unvermeidlichen Streuung der Spannungswerte ein unrichtiger Wert der Totalspannung ermittelt werden. Für die Totalspannung muss zudem die Fadenzahl bekannt sein, um die Spannung des Einzelfadens zu bestimmen.

Die heute an eine brauchbare Kettspannungsmessung zu stellenden Anforderungen sind im wesentlichen folgende :

kleine bauliche Ausgestaltung, damit Möglichkeit der universellen Verwendung auf einer Vielzahl von Webmaschinen ;

Schonung der Kettfäden durch Vermeidung zusätzlicher Spannungs- oder Auslenkmechanismen mit grossen Auslenkwegen ;

Gewinnung der Momentanwerte der Kettspannung entweder am einzelnen Kettfaden, an einer Gruppe von Kettfäden oder über die ganze Kettbreite ;

Möglichkeit der elektronischen Auswertung des Messignals mit anpassbarem Regelverhalten zum Zwecke der positiven Steuerung der Kettspannung ;

Stabilität des Messignals über lange Zeit ohne Nachjustieren.

Die vorliegende Erfindung vermeidet diese Nachteile bekannter Spannungsmessysteme und betrifft ein Verfahren zur Messung und Regelung der Kettfadenspannung bei Webmaschinen, das sich dadurch auszeichnet, dass nur ein Teil der Kettfäden simultan transversalen Auslenkungen unterworfen wird und aus dem Mittelwert der Fortpflanzungsgeschwindigkeiten dieser simultanen transversalen Auslenkungen der Meßwert für die Kettspannung gebildet und in Abhängigkeit von diesem Meßwert der Kettbaum bewegt wird. Die Erfindung bezieht sich auch auf eine Vorrichtung zur Durchführung des Verfahrens, welche Vorrichtung mindestens einen Erreger zur Anregung mindestens eines Teiles der Kettfadenschar zu transversalen Auslenkungen, mindestens einen Aufnehmer zur Erfassung der zeitlich verschoben ankommenden transversalen Auslenkungen, sowie einen Signalumformer zur Bildung eines Messignals aus dem Mittelwert der erfaßten Meßwerte und zur Bildung eines Regelsignals für die Bewegung des Kettbaums enthält.

Sowohl als Erreger als auch als Aufnehmer können bekannte piezoelektrische, elektromagnetisch oder elektrodynamisch wirkende Wandler verwendet werden.

Das erfindungsgemässe Verfahren kommt dem praktischen Bedürfnis entgegen, dass in der Webmaschine effektiv die spezifische Fadenspannung (cN/tex) gemessen wird. Im Prinzip wird die Fadenspannung, insbesondere die Kettspannung, nämlich stets aus der optimalen spezifischen Kettspannung hergeleitet, indem die optimale spezifische Kettspannung für jedes Kettgarnmaterial dem Praktiker bekannt ist. Diese Fadenspannung ist unabhängig von der Garnfeinheit und von der totalen Zahl der beteiligten Fäden.

Mit dem erfindungsgemässen Verfahren ist es somit möglich, über einen relativ kleinen Abschnitt der Kettfadenschicht die Kettspannung zu messen, wobei dieser Abschnitt an mindestens einer beliebigen Stelle der Kettfadenschicht wählbar ist.

Ein weiterer Vorteil infolge der Unabhängigkeit von der Fadenzahl ist darin zu sehen, dass die Fortpflanzungsgeschwindigkeit der transversalen Auslenkungen ebenfalls nicht von der Fadenzahl abhängt.

Die Spannungen der einzelnen Kettfäden sind nicht genau gleich, sondern sie sind um einen Mittelwert statistisch verteilt, wobei die Streuungsbreite variieren kann. Andernfalls würde die Messung an einem einzigen Faden genügen. Als besonderer Vorteil des vorliegenden Verfahrens kann aus einer Vielzahl von Fäden der Mittelwert gebildet werden, indem der Mittelwert der Fortpflanzungsgeschwindigkeit dieser Verteilung bestimmt wird. Somit erhält man als Messwert für die Kettspannung über eine Vielzahl von Kettfäden den Mittelwert über die Messbreite.

Schliesslich kann mit dem gemäss der Erfindung gewonnenen Messignal die Aufgabe erfüllt werden, ein gewünschtes Regelverhalten zur Regulierung der Spannung durch elektrische Auswertung des Messignals zu erzielen. Dafür sind übliche Verfahren der Regeltechnik verwendbar.

Anhand der Beschreibung und der Figuren wird die Erfindung näher erläutert. Dabei zeigt

Figur 1 das Prinzip einer wellenförmigen Fortpflanzung ;

Figur 2 den Aufbau, wobei jedoch eine stehende Welle gezeigt ist ;

Figur 3 Erzeugung einer Resonanzschwingung mittels mechanischen Erregern ;

Figur 4 einen Schnitt durch eine schematisch dargestellte Webmaschine mit Möglichkeiten für das Aufdrücken von Auslenkungen.

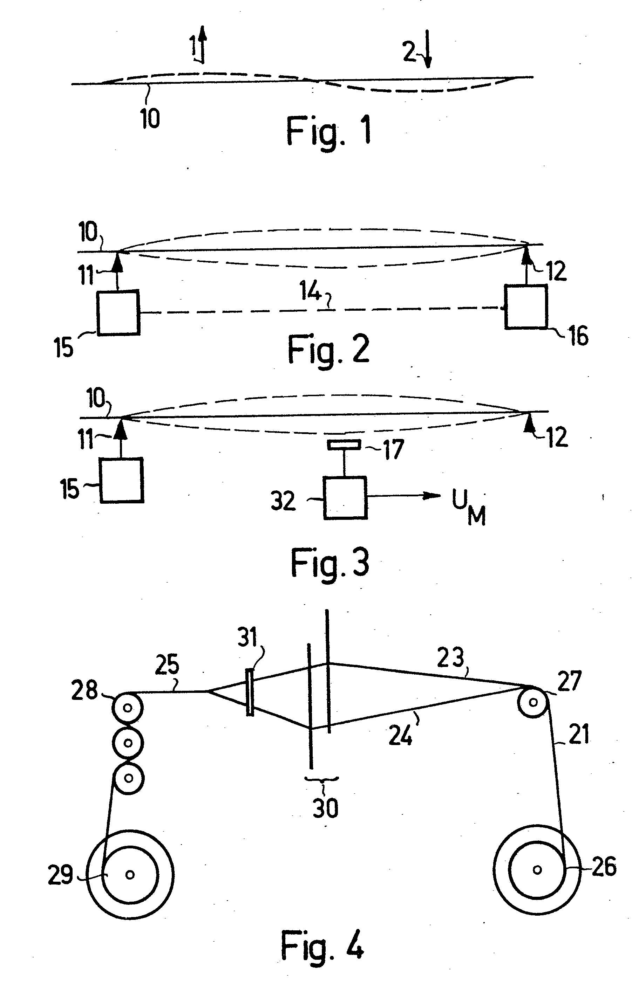

Figur 1 stellt das Prinzip der wellenförmigen Fortpflanzung von transversalen Auslenkungen längs gerade gespannter Gebilde, wie sie durch Fäden, insbesondere Kettfäden, gebildet werden, dar. Anstelle einer Fadens oder einer Fadenschicht 10 können solche transversalen Auslenkungen auch am fertigen Gewebe, das sowohl Kettfäden als auch Schussfäden aufweist, angebracht werden.

Eine transversale Auslenkung bei 1 pflanzt sich nach beiden Seiten mit einer Geschwindigkeit fort, die von der Spannung des Fadens 2 abhängt. Somit trifft die Auslenkung bei 2 nach einer bestimmten Zeit ein. Aus der zeitlichen Beziehung zwischen Erregersignal und dem Signal der Auslenkung durch den Aufnehmer kann die spezifische Fadenspannung bestimmt werden gemäss der bekannten Beziehung zwischen Fadenspannung F, dem F dengewicht pro Längeneinheit G und der Ausbreitungsgeschwindigkeit v der Auslenkung :

$$v = \sqrt{\frac{F}{G}} . \qquad (I)$$

Fig. 2 und 3 zeigen den Kettfaden 10 zwischen zwei Auflagen 11, 12 in Resonanzschwingung. Dieses mit Resonanzschwingungen arbeitende Verfahren ist nicht gegenstand der Erfindung. Zur Anregung der Schwingungen dient der Erreger 15 ; es ist ferner ein Aufnehmer 16 vorhanden ; dieser ist — lediglich zur Aufrechterhaltung der Resonanzbedingungen — mit dem Erreger 15 über eine Leitung 14 rückgekoppelt.

Die Anordnung kann so getroffen sein, dass die Auflagen 11, 12 durch Organe der Webmaschine selbst, wie z. B. Kettbaum, Streichbaum u. s. w. gebildet werden. Besonders vorteilhaft ist es, wenn Erreger 15 oder Aufnehmer 16 oder beide als Auflage 11 bzw. 12 dienen. Auch diese Methoden sind für die Anregung von « schwingenden Saiten » bekannt.

Als Erreger bieten sich eine Vielzahl von Bauelementen an. Sie können zum Beispiel piezoelektrisch, elektrodynamisch, elektromagnetisch u. s. w. ausgeführt sein. Ebenso bieten sich auf der Seite der Aufnehmer eine Vielzahl von Möglichkeiten an, wie beispielsweise piezoelektrische, elektromechanische, optische u. a. m.

Zwischen den beiden Stützen 11, 12 befinden sich ein oder mehrere Sensoren, die die transversalen Bewegungen der Fäden in elektrische Signale umwandeln. Die Sensoren arbeiten vorzugsweise berührungslos. Es können abstandsempfindliche Wandler (Fig. 3, 17) bekannter Art verwendet werden. Es kann auch mindestens eine der Stützen 11, 12 als Sensor ausgebildet sein.

Die Vorteile einer solchen Anordnung bestehen darin, dass die Umlenkung auf den Stützen 11, 12 nur geringfügig ist und dass zudem die Fäden 10 nur einseitig zugänglich sein müssen. Durch diesen vernachlässigbaren kleinen Eingriff ist das Verfahren besonders geeignet für den Einsatz auf Produktionsmaschinen wie z. B. für die Messung der Kettspannung an Webmaschinen. Weitere Vorteile sind die Unabhängigkeit von der Fadenzahl sowie die hohe langzeitstabilität dank der direkten Ausnützung einer physikalisch eindeutigen Beziehung [1].

Figur 4 zeigt schematisch einen Querschnitt durch eine Webmaschine, mit einem Kettbaum 26, Streichbaum 27, Brustbaum 28, Warenbaum 29, Fachbildeorganen 30 und Webeblatt 31. Die Kettspannung ist messbar an den angespannten Kettfäden 21 zwischen Kettbaum 26 und Streichbaum 27, oder an den Kettfäden im Bereiche des Webfaches 23, 24, oder im Bereich des bereits vorliegenden Gewebes 25.

Die Messung der Kettspannung an der Kettfadenschar 21 ergibt Verfälschungen der Kettspannung infolge der nicht definierten Reibung am Streichbaum 27.

Die Kettspannung im Bereich der Fachbildungsorgane 30 ist wohl am zuverlässigsten vom Standpunkt der tatsächlichen Spannung, sie ist aber durch den ständigen Fachwechsel periodischen Veränderungen ausgesetzt.

Es besteht aber auch die Möglichkeit, die Kettspannung im Bereich des bereits vorliegenden Gewebes 25 zu messen, wobei zu berücksichtigen ist, dass die ursprüngliche Fortpflanzungsgeschwindigkeit durch den Einschlag der Schussfäden verändert ist.

Das Messignal $U_M$ ist ein elektrisches Signal, das in einem Signalumformer 32 nach regelungstechnischen Gesichtspunkten verarbeitet wird. Die Konstanthaltung der Kettspannung erfolgt nach dem bekannten Prinzip von Messen, Verstärken und Steuern eines Aktivators. Zur Regelung der Kettspannung ist der Eingriff auf den Kettbaum 26 vorgesehen, indem dieser durch einen Aktivator im Sinne kleiner Drehschritte bewegt wird, so dass die Kettspannung nur innerhalb enger Grenzen schwankt.

## Patentansprüche

1. Verfahren zur Messung und Regelung der Kettfadenspannung bei Webmaschinen, dadurch gekennzeichnet, daß nur ein Teil der Kettfäden simultan transversalen Auslenkungen unterworfen und aus dem Mittelwert der Fortpflanzungsgeschwindigkeiten dieser simultanen transversalen Auslenkungen der Meßwert für die Kettspannung gebildet und in Abhängigkeit von diesem Meßwert der Kettbaum bewegt wird.

2. Verfahren nach Anspruch 1, dadurch gekennzeichnet, daß die Fortpflanzungsgeschwindigkeit an mehreren Stellen gleichzeitig gemessen wird.

3. Verfahren nach Anspruch 1, dadurch gekennzeichnet, daß als Auflagestellen (11, 12) für die Kettfäden (10), zwischen denen die transversalen Auslenkungen angeregt werden, feste Einspannteile der Webmaschine benützt werden.

4. Verfahren nach Anspruch 1, dadurch gekennzeichnet, daß als Auflagestellen (11, 12), zwischen denen die transversalen Auslenkungen angeregt werden, Stege benützt werden, die einem Erreger (15) bzw. einem Aufnehmer (16) zugeordnet sind.

5. Verfahren nach Anspruch 1, dadurch gekennzeichnet, daß die Messung der Kettspannung an der Kettfadenschar (21) zwischen Kettbaum (26) und Streichbaum (27) vorgenommen wird.

6. Verfahren nach Anspruch 1, dadurch gekennzeichnet, daß die Messung der Kettspannung an der Kettfadenschar (23, 24) zwischen Streichbaum (27) und Fachbildorganen (30) vorgenommen wird.

7. Vorrichtung zur Durchführung des Verfahrens nach Anspruch 1, gekennzeichnet durch mindestens einen Erreger (15) zur Anregung mindestens eines Teils der Kettfadenschar (10) zu simultanen transversalen Auslenkungen, durch mindestens einen Aufnehmer (16) zur Erfassung der zeitlich verschoben ankommenden transversalen Auslenkungen sowie einen Signalumformer (32) zur Bildung eines Messignals ($U_M$) aus dem Mittelwert der erfaßten Meßwerte und zur Bildung eines Regelsignals für die Bewegung des Kettbaums.

8. Vorrichtung nach Anspruch 7, dadurch gekennzeichnet, daß Erreger (15) und Aufnehmer (16) in einer Kettfadenzone mit festen Auflagen (11, 12) angeordnet sind.

9. Vorrichtung nach Anspruch 7, dadurch gekennzeichnet, daß Erreger (15) und Aufnehmer (16) mit Stegen als Stützen für die Kettfäden (10) versehen sind.

10. Vorrichtung nach Anspruch 7, dadurch gekennzeichnet, daß Erreger (15) und Aufnehmer (16) mindestens eine Breite aufweisen, über die eine Vielzahl von Kettfäden (10) zu transversalen Auslenkungen anregbar ist.

## Claims

1. A method of measuring and regulating the warp filament tension in weaving machines, characterised in that only a part of the warp filaments are subjected to simultaneous transversal deflections and the measured value for the warp tension is formed from the mean value of the speed of propagation of these simultaneous transversal deflections ; and in that the warp beam is moved in dependence on this measured value.

2. A method in accordance with claim 1, characterised in that the speed of propagation is simultaneously measured at several points.

3. A method in accordance with claim 1, characterised in that fixed clamping parts of the weaving machine are used as the support points (11, 12) for the warp threads (10) between which the transversal deflections are stimulated.

4. A method in accordance with claim 1, characterised in that ribs are used as the support points (11, 12) between which the transversal deflections are stimulated, the ribs being associated with an exciter (15) and a pick-up (16) respectively.

5. A method in accordance with claim 1, characterised in that the measurement of the warp tension is effected at the warp filaments (21) between the warp beam (26) and backrest (27).

6. A method in accordance with claim 1, characterised in that the measurement of the warp tension is effected at the warp threads (23, 24) between the backrest (27) and the shedding members (30).

7. Apparatus for carrying out the method of claim 1, characterised by at least one exciter (15) for stimulating at least a part of the warp threads (10) to execute simultaneous transverse deflections, by at least one pick-up for detecting the time displaced arrival of the transverse deflections and also by a signal former (32) for forming a measurement signal ($U_M$) from the mean value of the detected measured values and for forming a regulating signal for the movement of the warp beam.

8. Apparatus in accordance with claim 7, characterised in that exciter (15) and pick-up (16) are arranged in a warp thread zone with fixed supports (11, 12).

9. Apparatus in accordance with claim 7, characterised in that exciter (15) and pick-up (16) are provided with ribs as supports for the warp threads (10).

10. Apparatus in accordance with claim 7, characterised in that exciter (15) and pick-up (16) at least have a width by which a plurality of warp threads (10) can be stimulated to execute transversal deflections.

**Revendications**

1. Procédé de mesure et de réglage de la tension de fil de chaîne dans des métiers à tisser, caractérisé en ce qu'une partie seulement des fils de chaîne est soumise à des déviations transversales simultanées et à partir de la valeur moyenne des vitesses de propagation de ces déviations transversales simultanées, la valeur de mesure pour la tension de chaîne est formée et l'ensouple dérouleuse est déplacée en fonction de cette valeur de mesure.

2. Procédé suivant la revendication 1, caractérisé en ce que la vitesse de propagation est mesurée simultanément en plusieurs endroits.

3. Procédé suivant la revendication 1, caractérisé en ce qu'on utilise comme appuis (11, 12) pour les fils de chaîne (10), entre lesquels les déviations transversales sont provoquées, des pièces de pinçage fixes du métier à tisser.

4. Procédé suivant la revendication 1, caractérisé en ce qu'on utilise comme appuis (11, 12) entre lesquels sont provoquées les déviations, des entretoises auxquelles sont associés un excitateur (15) et un capteur (16).

5. Procédé suivant la revendication 1, caractérisé en ce que la mesure de la tension de chaîne est effectuée sur le système de fils de chaîne (21) entre l'ensouple dérouleuse (26) et le cylindre d'appui arrière (27).

6. Procédé suivant la revendication 1, caractérisé en ce que la mesure de la tension de chaîne est effectuée sur le système de fils de chaîne (23, 24) entre le cylindre d'appui arrière (27) et les organes formateurs de foule (30).

7. Dispositif pour la mise en œuvre du procédé suivant la revendication 1, caractérisé par au moins un excitateur (15) pour l'excitation d'une partie au moins du système de fils de chaîne (10) en déviations transversales simultanées, par ou moins un capteur (16) pour la détection des déviations transversales incidentes décalées dans le temps, ainsi qu'un convertisseur de signal (32) pour la formation d'un signal de mesure ($U_M$) à partir de la valeur moyenne des valeurs de mesure captées et pour former un signal de réglage pour le déplacement de l'ensouple dérouleuse.

8. Dispositif suivant la revendication 7, caractérisé en ce que l'excitateur (15) et le capteur (16) sont disposés dans une zone de fils de chaîne avec des appuis fixes (11, 12).

9. Dispositif suivant la revendication 7, caractérisé en ce que l'excitateur (15) et le capteur (16) sont dotés d'entretoises comme appuis pour les fils de chaîne (10).

10. Dispositif suivant la revendication 7, caractérisé en ce que l'excitateur (15) et le capteur (16) présentent au moins une largeur sur laquelle une multiplicité de fils de chaîne (10) peut être excitée en déviations transversales.

Fig. 1

Fig. 2

Fig. 3

Fig. 4